# EUROPÄISCHE PATENTSCHRIFT

(11) **EP 3 693 821 B1**
(45) Veröffentlichungstag und Bekanntmachung des Hinweises auf die Patenterteilung: **23.10.2024**
(21) Anmeldenummer: 19156343.6
(22) Anmeldetag: 11.02.2019
(51) Int. Cl.: G05B 19/418, B25J 9/16

(54) **DRAHTLOSE INFORMATIONSÜBERMITTLUNG ZWISCHEN EINER ROBOTERGRUPPE UND EINER STATIONÄREN KOMMUNIKATIONSEINHEIT**
WIRELESS TRANSMISSION OF INFORMATION BETWEEN A GROUP OF ROBOTS AND A STATIONARY COMMUNICATION UNIT
TRANSMISSION D'INFORMATIONS SANS FIL ENTRE UN GROUPE DE ROBOTS ET UNE UNITÉ DE COMMUNICATION FIXE

(43) Veröffentlichungstag der Anmeldung: 12.08.2020
(73) Patentinhaber: Siemens Logistics GmbH, 90429 Nürnberg (DE)
(72) Erfinder: ZISCH, Rainer, 78337 Öhningen (DE)
(74) Vertreter: Siemens Patent Attorneys

(56) Entgegenhaltungen:
- US-A1- 2004 030 451

## Beschreibung

Die Erfindung betrifft eine drahtlose Übermittlung von Sicherheits- und/oder Zustandsinformationen zwischen einer mehrere mobile Roboter umfassenden Robotergruppe und einer stationären Kommunikationseinheit.

Mobile Roboter können in unterschiedlichen Anwendungsgebieten zur Erledigung bestimmter Aufgaben eingesetzt werden.

Beispielsweise zeigt die US 2004/030451 A1 ein im militärischen Bereich angesiedeltes Verfahren zum Übermitteln von Zustandsinformationen von einer mehrere mobile Roboter umfassenden Robotergruppe an eine als Satellit ausgeprägte Kommunikationseinheit. Dabei wird ein Roboter der Robotergruppe als Master-Roboter betrieben, von dem seine eigenen Zustandsinformationen und Zustandsinformationen mindestens eines Slave-Roboter an den Satelliten gesendet bzw. weitergeleitet werden. Die Nachrichtenübertragung in die andere Richtung erfolgt entsprechend.

Mobile Roboter können beispielsweise insbesondere auch zum Transportieren und/oder Sortieren von Gegenständen, insbesondere zum Transportieren und Sortieren von Waren in einer Lagerhalle oder zum Transportieren von Gepäck in einem Flughafen, eingesetzt werden.

Damit mobile Roboter einer Robotergruppe sicherheitskritische Situationen in einem Sicherheitsbereich einer Anlage, in der die Robotergruppe eingesetzt wird, erkennen und darauf reagieren können, kann vorgesehen sein, dass der jeweilige Roboter der Robotergruppe ein eigenes, sensorbasiertes Sicherheitssystem aufweist. Ein solches Sicherheitssystem eines Roboters kann den Roboter im Falle einer Detektion einer sicherheitskritischen Situation zur Durchführung einer vorgegebenen Aktion veranlassen.

Nachteilig bei solchen Sicherheitssystemen ist, dass eine sicherheitskritische Situation, die außerhalb der durch die Sicherheitssysteme überwachbaren Raumbereiche auftritt, wie zum Beispiel ein Brand in einem entfernten Anlagenbereich, ggf. nicht detektiert wird, sodass eine Reaktion der Roboter auf eine solche sicherheitskritische Situation ausbleibt.

Damit die mobilen Roboter einer Robotergruppe auf sicherheitskritische Situationen, die außerhalb der durch ihre Sicherheitssysteme überwachbaren Raumbereiche auftreten, reagieren können, kann vorgesehen sein, dass die Roboter drahtlos mit einer stationären Kommunikationseinheit kommunizieren, welche den Robotern Sicherheitsinformationen bereitstellt und an die ggf. von den Robotern Zustandsinformationen bezüglich ihrer Zustände und/oder der Zustände der Roboter-Umgebungen übermittelt werden.

Problematisch ist hierbei grundsätzlich, dass zwischen der stationären Kommunikationseinheit und den Robotern nur eine begrenzte Anzahl von Punkt-zu-Punkt-Verbindungen hergestellt werden kann. Insbesondere bei einer Robotergruppe mit einer großen Anzahl von Robotern kann die Anzahl realisierbarer Punkt-zu-Punkt-Verbindungen ggf. nicht ausreichen, um zwischen jedem Roboter der Robotergruppe und der stationären Kommunikationseinheit eine Drahtloskommunikationsverbindung herzustellen.

Bisher wurde versucht, dieses Problem dadurch zu lösen, dass für denselben Sicherheitsbereich mehrere stationäre Kommunikationseinheiten für die Informationsübermittlung vorgesehen werden, sodass die Gesamtanzahl realisierbarer Punkt-zu-Punkt-Verbindungen zwischen der Robotergruppe und den mehreren stationären Kommunikationseinheiten - verglichen mit dem Fall, dass für den jeweiligen Sicherheitsbereich nur eine stationäre Kommunikationseinheit vorgesehen ist - erhöht werden kann. Dieser Ansatz ist jedoch mit hohen Kosten und einer hohen Komplexität der Kommunikationsinfrastruktur verbunden.

Eine Aufgabe der Erfindung ist es, zumindest einige der zuvor erwähnten Nachteile des Standes der Technik zu verringern oder zu vermeiden. Insbesondere wird angestrebt, eine Informationsübermittlung zwischen einer stationären Kommunikationseinheit und den mobilen Robotern einer Robotergruppe zu ermöglichen, die mit geringen Kosten realisiert werden kann und/oder eine geringe Komplexität aufweist.

Die zuvor erwähnte Aufgabe wird erfindungsgemäß gelöst durch ein Verfahren zum Übermitteln von Sicherheitsinformationen an eine Robotergruppe nach Anspruch 1, durch ein Verfahren zum Übermitteln von Zustandsinformationen an eine stationäre Kommunikationseinheit nach Anspruch 2. Außerdem wird diese Aufgabe erfindungsgemäß durch ein System nach Anspruch 13, durch ein Computerprogramm nach Anspruch 14 sowie durch ein computerlesbares Speichermedium nach Anspruch 15 gelöst.

Bevorzugte Ausgestaltungen der Erfindung sind in den weiteren Ansprüchen sowie in der nachfolgenden Beschreibung angegeben.

Bei dem erfindungsgemäßen Verfahren zum Übermitteln von Sicherheitsinformationen an eine Robotergruppe umfasst die Robotergruppe mehrere mobile Roboter. Zudem werden die Sicherheitsinformationen von einer stationären Kommunikationseinheit drahtlos an die Robotergruppe übermittelt. Erfindungsgemäß ist vorgesehen, dass ein Roboter der Robotergruppe hinsichtlich einer Kommunikation mit der stationären Kommunikationseinheit als Master-Roboter betrieben wird, welcher über eine Langstrecken-Drahtloskommunikationsschnittstelle mit der stationären Kommunikationseinheit verbunden ist und an den von der stationären Kommunikationseinheit über die Langstrecken-Drahtloskommunikationsschnittstelle die Sicherheitsinformationen übermittelt werden. Ferner ist erfindungsgemäß vorgesehen, dass mindestens ein Roboter der Robotergruppe hinsichtlich der Kommunikation mit der stationären Kommunikationseinheit als Slave-Roboter betrieben wird, an welchen vom Master-Roboter über eine Kurzstrecken-Drahtloskommunikationsschnittstelle die vom Master-Roboter empfangenen Sicherheitsinformationen weitergeleitet werden.

Dadurch, dass der Master-Roboter die von der stationären Kommunikationseinheit empfangenen Sicherheitsinformationen an den bzw. die Slave-Roboter der Robotergruppe weitergeleitet, benötigt der jeweilige Slave-Roboter keine direkte Verbindung zu der stationären Kommunikationseinheit, um die Sicherheitsinformationen zu erhalten. Diese "hierarchische" Art der Informationsübertragung, bei der die Sicherheitsinformationen von der stationären Kommunikationseinheit zunächst an den Master-Roboter übermittelt werden und dieser die empfangenen Sicherheitsinformationen dann an den bzw. die Slave-Roboter der Robotergruppe weiterleitet, hat daher den Vorteil, dass zwischen dem jeweiligen als Slave-Roboter betriebenen Roboter der Robotergruppe und der stationären Kommunikationseinheit eine Punkt-zu-Punkt-Verbindung eingespart werden kann. Insbesondere kann eine einzige direkte Verbindung zwischen der Robotergruppe und der stationären Kommunikationseinheit ausreichen, um Sicherheitsinformationen der Kommunikationseinheit sämtlichen Robotern der Robotergruppe zur Verfügung stellen zu können.

Da die Roboter einer Robotergruppe, insbesondere in dem Fall, dass die Roboter eine gemeinsame Aufgabe erledigen, einen vergleichsweise geringen Abstand zueinander aufweisen, kann für das Weiterleiten der Sicherheitsinformationen vom Master-Roboter an einen Slave-Roboter der Robotergruppe eine Kurzstrecken-Drahtloskommunikationsschnittstelle verwendet werden. Eine solche Drahtloskommunikationsschnittstelle ist üblicherweise kostengünstiger und hat eine geringe Komplexität als eine Langstrecken-Drahtloskommunikationsschnittstelle, was dazu beiträgt, dass das Verfahren mit geringen Kosten und einer geringen Komplexität der Kommunikationsinfrastruktur realisiert werden kann.

Unter einer Robotergruppe ist vorliegend eine Gruppe von mehreren mobilen Robotern zu verstehen, die zwei oder mehr, vorzugsweise mindestens drei, mobile Roboter umfasst. Vorzugsweise können sich die Roboter der Robotergruppe unabhängig voneinander bewegen.

Die Roboter der Robotergruppe können insbesondere autonome mobile Roboter sein. Zudem kann es sich bei den Robotern beispielsweise um selbstlernende Roboter handeln.

In bevorzugter Weise sind die Roboter der Robotergruppe jeweils mit mindestens einer Langstrecken-Drahtloskommunikationsschnittstelle sowie mindestens einer Kurzstrecken-Drahtloskommunikationsschnittstelle, insbesondere mindestens zwei Kurzstrecken-Drahtloskommunikationsschnittstellen, ausgestattet. Ferner ist es bevorzugt, wenn die stationäre Kommunikationseinheit mindestens eine Langstrecken-Drahtloskommunikationsschnittstelle aufweist.

Zweckmäßigerweise nutzt die stationäre Kommunikationseinheit ihre Langstrecken-Drahtloskommunikationsschnittstelle, um die Sicherheitsinformationen an den Master-Roboter zu senden. Der Master-Roboter nutzt zweckmäßigerweise seine Langstrecken-Drahtloskommunikationsschnittstelle, um die von der stationären Kommunikationseinheit versendeten Sicherheitsinformationen zu empfangen.

Zum Weiterleiten der von der Kommunikationseinheit übermittelten Sicherheitsinformationen an einen Slave-Roboter der Robotergruppe nutzt der Master-Roboter zweckmäßigerweise seine Kurzstrecken-Drahtloskommunikationsschnittstelle bzw. eine seiner Kurzstrecken-Drahtloskommunikationsschnittstellen. Der Slave-Roboter der Robotergruppe nutzt zweckmäßigerweise seine Kurzstrecken-Drahtloskommunikationsschnittstelle bzw. eine seiner Kurzstrecken-Drahtloskommunikationsschnittstellen zum Empfangen der Sicherheitsinformationen.

Bei den Sicherheitsinformationen handelt es sich vorzugsweise um Informationen, welche die Sicherheit von Menschen und/oder die Sicherheit einer technischen Einrichtung betreffen.

Die Sicherheitsinformationen können insbesondere einen oder mehrere sicherheitsrelevante Steuerbefehle für die Robotergruppe, wie zum Beispiel einen Not-Aus-Befehl oder dergleichen, umfassen, der/die von einem oder mehreren der Roboter umsetzbar ist/sind. Alternativ oder zusätzlich können die Sicherheitsinformationen beispielsweise sicherheitsrelevante Zustandsinformationen umfassen, die von einem oder mehreren der Roboter verarbeitbar sind.

Zweckmäßigerweise sind die Roboter der Robotergruppe jeweils mit einem Prozessor zum Ausführen eines Computerprogramms sowie zum Auswerten von Daten ausgestattet. Ferner ist es zweckmäßig, wenn der jeweilige Roboter eine Sensoreinheit zum Überwachen seines Zustands und/oder zum Überwachen eines Zustands seiner Umgebung aufweist, welche Zustandsinformationen bezüglich des Zustands des Roboters und/oder bezüglich des Zustands seiner Umgebung erzeugt.

In bevorzugter Weise ist der jeweilige Roboter mit einem Steueralgorithmus ausgestattet, der unter Verwendung zumindest eines Teils der Sicherheitsinformationen und/oder unter Verwendung der vom Roboter erzeugten Zustandsinformationen sicherheitsrelevante Steuerbefehle für den Roboter erzeugt.

Als Kurzstrecken-Drahtloskommunikationsschnittstelle im Sinne der Erfindung ist eine Kommunikationsschnittstelle zur drahtlosen Datenübertragung zu verstehen, welche kurze Distanzen von beispielsweise maximal 20 m überbrücken kann. Insbesondere kann eine Kurzstrecken-Drahtloskommunikationsschnittstelle im Sinne der Erfindung eine Kommunikationsschnittstelle sein, die Distanzen von maximal 15 m oder maximal 10 m überbrücken kann.

Als Langstrecken-Drahtloskommunikationsschnittstelle im Sinne der Erfindung ist eine Kommunikationsschnittstelle zur drahtlosen Datenübertragung zu verstehen, welche große Distanzen von beispielsweise mehr als 20 m überbrücken kann. Insbesondere kann eine Langstrecken-Drahtloskommunikationsschnittstelle im Sinne der Erfindung eine Kommunikationsschnittstelle sein, die Distanzen von mehr als 40 m oder mehr als 80 m überbrücken kann.

Insbesondere kann es sich bei der jeweiligen Drahtloskommunikationsschnittstelle um eine Funkschnittstelle handeln.

Bei dem erfindungsgemäßen Verfahren zum Übermitteln von Zustandsinformationen an eine stationäre Kommunikationseinheit werden die Zustandsinformationen von einer mehrere mobile Roboter umfassenden Robotergruppe drahtlos an die stationäre Kommunikationseinheit übermittelt. Erfindungsgemäß ist vorgesehen, dass ein Roboter der Robotergruppe hinsichtlich einer Kommunikation mit der stationären Kommunikationseinheit als Master-Roboter betrieben wird, welcher über eine Langstrecken-Drahtloskommunikationsschnittstelle mit der stationären Kommunikationseinheit verbunden ist und von dem über die Langstrecken-Drahtloskommunikationsschnittstelle die Zustandsinformationen an die stationäre Kommunikationseinheit übermittelt werden. Zudem ist erfindungsgemäß vorgesehen, dass mindestens ein Roboter der Robotergruppe hinsichtlich der Kommunikation mit der stationären Kommunikationseinheit als Slave-Roboter betrieben wird, von welchem über eine Kurzstrecken-Drahtloskommunikationsschnittstelle zumindest einen Teil der vom Master-Roboter an die Kommunikationseinheit zu übermittelnden Zustandsinformationen an den Master-Roboter weitergeleitet werden.

Bei besagten Zustandsinformationen handelt es sich vorzugsweise um Informationen, die sich auf Zustände der Roboter und/oder auf Zustände ihrer Umgebungen beziehen. In bevorzugter Weise werden die Zustandsinformationen unter Verwendung von Sensoreinheiten der Roboter erzeugt.

Das Verfahren zum Übermitteln von Zustandsinformationen an die stationäre Kommunikationseinheit kann dazu genutzt werden, die Zustandsinformationen an die Kommunikationseinheit zu übermitteln, ohne dass alle Roboter der Robotergruppe eine direkte Verbindung mit der stationären Kommunikationseinheit aufbauen müssen. Vielmehr ist es ausreichend, wenn von der Robotergruppe einzig der Master-Roboter über eine Langstrecken-Drahtloskommunikationsschnittstelle eine direkte Verbindung zu der Kommunikationseinheit aufweist. Der Master-Roboter kann die von ihm erzeugten Zustandsinformationen sowie die von anderen Robotern der Robotergruppe erzeugten Zustandsinformationen sammeln und über seine Langstrecken-Drahtloskommunikationsschnittstelle zusammen an die stationäre Kommunikationseinheit übermitteln.

Anhand der übermittelten Zustandsinformationen kann die Kommunikationseinheit Sicherheitsinformationen für die Robotergruppe generieren, die beispielsweise Steuerbefehle umfassen, und die Sicherheitsinformationen gemäß dem weiter oben beschriebenen Verfahren zum Übermitteln von Sicherheitsinformationen an die Robotergruppe übermitteln. Das Verfahren zum Übermitteln von Sicherheitsinformationen an die Robotergruppe und das Verfahren zum Übermitteln von Zustandsinformationen an die stationäre Kommunikationseinheit können also genutzt werden, um wechselseitig Informationen zwischen der Kommunikationseinheit und der Robotergruppe auszutauschen.

Vorzugsweise wird derjenige Roboter der Robotergruppe, bei dem die Signalstärke eines von der stationären Kommunikationseinheit über ihre Langstrecken-Drahtloskommunikationsschnittstelle ausgesandten Signals am größten ist, hinsichtlich der Kommunikation mit der Kommunikationseinheit zum Master-Roboter bestimmt. Dadurch kann eine gute Übertragungsqualität bei der Informationsübermittlung zwischen der stationären Kommunikationseinheit und der Robotergruppe erreicht werden. Alternativ kann die Auswahl des Master-Roboters nach einem anderen Auswahlkriterium erfolgen. Zum Beispiel kann die Auswahl des Master-Roboters in Abhängigkeit der Positionen und/oder Bewegungsrichtungen der Roboter erfolgen.

Die Weiterleitung von Informationen von einem Slave-Roboter der Robotergruppe an den Master-Roboter kann indirekt, d. h. über einen anderen Slave-Roboter der Robotergruppe, oder direkt erfolgen. Umgekehrt kann die Weiterleitung von Informationen vom Master-Roboter an ein Slave-Roboter der Robotergruppe direkt oder indirekt erfolgen.

Vorteilhafterweise handelt es sich bei der jeweiligen Drahtloskommunikationsschnittstelle um eine bidirektionale Schnittstelle, also um eine Schnittstelle, über welche Daten gesendet und empfangen werden können.

Die jeweilige Drahtloskommunikationsschnittstelle umfasst zweckmäßigerweise mindestens eine Antenne zum Senden und Empfangen von Signalen. Weiter ist es zweckmäßig, wenn der jeweilige Roboter mit einer Kodier-Dekodier-Einheit zum Kodieren und Dekodieren von Signalen ausgestattet ist.

Besonders bevorzugt ist es, wenn hinsichtlich der Kommunikation mit der stationären Kommunikationseinheit bis auf den Master-Roboter alle Roboter der Robotergruppe als Slave-Roboter betrieben werden. Dadurch kann die Anzahl der für eine Informationsübertragung zwischen der stationären Kommunikationseinheit und der Robotergruppe benötigten Punkt-zu-Punkt-Verbindungen zwischen der stationären Kommunikationseinheit und der Robotergruppe minimiert werden, da in diesem Fall nur eine einzige Punkt-zu-Punkt-Verbindung benötigt wird. Insbesondere vor diesem Hintergrund ist es vorteilhaft, wenn von der Robotergruppe einzig der Master-Roboter über eine Langstrecken-Drahtloskommunikationsschnittstelle eine direkte Verbindung zu der besagten stationären Kommunikationseinheit aufweist.

Mindestens einer der beiden Typen von Drahtloskommunikationsschnittstellen, vorzugsweise jeder der beiden Typen von Drahtloskommunikationsschnittstellen, ist vorteilhafterweise eine standardisierte Drahtloskommunikationsschnittstelle. Die Langstrecken-Drahtloskommunikationsschnittstelle kann zum Beispiel einem Ethernet-Standard bzw. einem Ethernet-basierten Standard entsprechen. Alternativ kann die Langstrecken-Drahtloskommunikationsschnittstelle zum Beispiel dem 4G-Mobilfunkstandard (auch LTE genannt) oder dem 5G-Mobilfunkstandard entsprechen.

In bevorzugter Weise wird als Langstrecken-Drahtloskommunikationsschnittstelle eine WLAN-Schnittstelle oder eine Mobilfunkschnittstelle verwendet. Als Kurzstrecken-Drahtloskommunikationsschnittstelle wird vorzugsweise eine Bluetooth-Schnittstelle oder eine ZigBee-Schnittstelle verwendet.

Bei einer vorteilhaften Erfindungsvariante umfasst die Robotergruppe mindestens drei mobile Roboter. In diesem Fall wird vorzugsweise mindestens einer der Slave-Roboter als Submaster-Roboter betrieben, an welchen die vom Master-Roboter empfangenen Sicherheitsinformationen über eine Kurzstrecken-Drahtloskommunikationsschnittstelle übermittelt werden und von dem diese Informationen über eine weitere Kurzstrecken-Drahtloskommunikationsschnittstelle an mindestens einen anderen Slave-Roboter der Robotergruppe weitergeleitet werden. Auf diese Weise kann erreicht werden, dass die vom Master-Roboter empfangenen Sicherheitsinformationen an mehrere Roboter der Robotergruppe weitergeleitet werden, ohne dass der Master-Roboter mehr als eine direkte Verbindung zu anderen Roboter der Robotergruppe aufweisen muss. Dadurch kann als Kurzstrecken-Drahtloskommunikationsschnittstelle insbesondere eine Kommunikationsschnittstelle genutzt werden, mittels welches maximal eine Punkt-zu-Punkt-Verbindung zur selben Zeit hergestellt werden kann.

Die Kurzstrecken-Drahtloskommunikationsschnittstelle, über die der Submaster-Roboter Informationen erhält, und die Kurzstrecken-Drahtloskommunikationsschnittstelle, über die der Submaster-Roboter Informationen weiterleitet, sind vorzugsweise gleichartige Kurzstrecken-Drahtloskommunikationsschnittstellen des Submaster-Roboters. Zum Beispiel kann es sich dabei um zwei Bluetooth-Schnittstellen handeln.

Bei einer bevorzugten Ausführungsform der Erfindung werden Daten unter den Robotern der Robotergruppe seriell weitergeleitet. Hierbei werden von dem jeweiligen Roboter der Robotergruppe Daten über eine Kurzstrecken-Drahtloskommunikationsschnittstelle an maximal einen der anderen Roboter der Robotergruppe direkt weitergeleitet. Auf diese Weise kann erreicht werden, dass jeder Roboter der Robotergruppe maximal zwei Kurzstrecken-Verbindungen zu anderen Roboter der Robotergruppe aufweist, wodurch eine vergleichsweise geringe Komplexität der Datenübertragung unter den Robotern der Robotergruppe ermöglicht wird.

Zweckmäßigerweise weist die stationäre Kommunikationseinheit einen Kommunikationsbereich auf, innerhalb dessen die Kommunikationseinheit über eine Langstrecken-Drahtloskommunikationsschnittstelle drahtlos Daten senden und empfangen kann, wobei sich der Master-Roboter der Robotergruppe zur Kommunikation mit der stationären Kommunikationseinheit innerhalb des Kommunikationsbereichs befinden muss, wobei der Master-Roboter die Daten an mindestens einen Slave-Roboter der Robotergruppe, der sich zumindest temporär außerhalb des Kommunikationsbereichs der stationären Kommunikationseinheit befinden kann, übermittelt.

Um diesem Roboter die Sicherheitsinformationen der stationären Kommunikationseinheit zur Verfügung stellen zu können, ist es ausreichend, wenn der Master-Roboter der Robotergruppe sich innerhalb des Kommunikationsbereichs befindet. Dadurch, dass der Master-Roboter die Sicherheitsinformationen an den Slave-Roboter, der sich außerhalb des Kommunikationsbereichs der stationären Kommunikationseinheit befindet, übermittelt, wird die effektive Kommunikationsreichweite der stationären Kommunikationseinheit vergrößert.

Vorteilhafterweise wird von mindestens einem der beiden Typen von Drahtloskommunikationsschnittstellen, vorzugsweise von jedem der beiden Typen von Drahtloskommunikationsschnittstellen, ein Sicherheitsprotokoll zur Datenübertragung genutzt. Besonders bevorzugt ist es, wenn das Sicherheitsprotokoll ein für eine sichere Datenübertragung zertifiziertes Protokoll ist.

Als Sicherheitsprotokoll kann beispielsweise das PROFIsafe-Protokoll des Profinet-Standards genutzt werden. Ein Vorteil dieses Protokolls ist, dass es für eine Datenübertragung mittels einer WLAN-Schnittstelle sowie für eine Datenübertragung mittels einer Bluetooth-Schnittstelle zertifiziert ist.

Wenn der Master-Roboter den Kommunikationsbereich der Kommunikationseinheit verlässt, wird vorteilhafterweise ein Slave-Roboter der Robotergruppe hinsichtlich der Kommunikation mit der stationären Kommunikationseinheit zum neuen Master-Roboter und der bisherige Master-Roboter hinsichtlich der Kommunikation mit der stationären Kommunikationseinheit zu einem Slave-Roboter. Dadurch wird weiterhin eine Informationsübertragung zwischen der stationären Kommunikationseinheit und der Robotergruppe ermöglicht, auch wenn sich der bisherige Master-Roboter nicht mehr innerhalb des Kommunikationsbereichs der Kommunikationseinheit befindet. In diesem Fall erfolgt eine Informationsübertragung zwischen der Kommunikationseinheit und der Robotergruppe vorteilhafterweise über die Langstrecken-Drahtloskommunikationsschnittstelle des neuen Master-Roboters.

Grundsätzlich kann die Robotergruppe zeitgleich mit mehreren stationären Kommunikationseinheiten, die beispielsweise unterschiedlichen Bereichen einer Anlage zugeordnet sein können, verbunden sein. Dies ermöglicht eine Informationsübermittlung zwischen den mehreren stationären Kommunikationseinheiten und der Robotergruppe. In solch einem Fall ist die Robotergruppe vorzugsweise jeweils über eine Langstrecken-Drahtloskommunikationsschnittstelle mit jeweiligen stationären Kommunikationseinheit verbunden.

Ein Roboter der Robotergruppe, welcher sich außerhalb des Kommunikationsbereichs der besagten Kommunikationseinheit und zugleich zumindest teilweise innerhalb eines solchen Kommunikationsbereichs einer zweiten stationären Kommunikationseinheit befindet, wird vorteilhafterweise hinsichtlich einer Kommunikation mit der zweiten stationären Kommunikationseinheit als Master-Roboter betrieben. Dieser weitere Master-Roboter ist vorzugsweise über eine Langstrecken-Drahtloskommunikationsschnittstelle mit der zweiten stationären Kommunikationseinheit verbunden. Ferner werden Sicherheitsinformationen von der zweiten stationären Kommunikationseinheit vorzugsweise an diesen weiteren Master-Roboter übermittelt. Mindestens ein Roboter der Robotergruppe wird vorteilhafterweise hinsichtlich der Kommunikation mit der zweiten stationären Kommunikationseinheit als Slave-Roboter betrieben, an welchen von letztgenanntem Master-Roboter über eine Kurzstrecken-Drahtloskommunikationsschnittstelle die von letztgenanntem Master-Roboter empfangenen Sicherheitsinformationen weitergeleitet werden. Dadurch können Sicherheitsinformationen der zweiten Kommunikationseinheit in der gleichen Weise an die Robotergruppe übermittelt werden wie die Sicherheitsinformationen der erstgenannten Kommunikationseinheit. Entsprechend können bei der Übermittlung von Sicherheitsinformationen der zweiten Kommunikationseinheit an die Robotergruppe die gleichen Vorteile realisiert werden wie bei der Übermittlung von Sicherheitsinformationen der erstgenannten Kommunikationseinheit.

Vorzugsweise wird ein sogenanntes iPCF-Verfahren (iPCF = industrial Point Coordindation Function), auch Rapid-Roaming-Verfahren genannt, genutzt, um bei einem Wechsel von einer Verbindung zu der erstgenannten Kommunikationseinheit zu einer Verbindung zu der zweiten Kommunikationseinheit kurze Roaming-Zeiten von vorzugsweise unter 50 ms zu erreichen.

Der Kommunikationsbereich der erstgenannten Kommunikationseinheit und der Kommunikationsbereich der zweiten Kommunikationseinheit können sich überlappen. Alternativ kann es sich bei diesen beiden Kommunikationsbereichen um Kommunikationsbereiche handeln, welche keinen gemeinsamen Überlappungsbereich aufweisen.

In einer vorteilhaften Ausführungsvariante der Erfindung ist vorgesehen, dass die mobilen Roboter der Robotergruppe derart betrieben werden, dass sich die Roboter synchron zueinander bewegen. Mit anderen Worten, bei einer vorteilhaften Ausführungsvariante der Erfindung ist vorgesehen, dass sich die mobilen Roboter der Robotergruppe mit der gleichen Geschwindigkeit in die gleiche Richtung bewegen. Auf diese Weise können die Roboter beispielsweise dazu genutzt werden, eine Last zu transportieren, welche auf den Robotern der Robotergruppe abgestützt ist.

Das erfindungsgemäße System umfasst mindestens eine stationäre Kommunikationseinheit zum Senden und/oder Empfangen von Informationen, die mindestens eine Langstrecken-Drahtloskommunikationsschnittstelle aufweist, sowie eine Robotergruppe mit mehreren mobilen Robotern, die jeweils mindestens eine Langstrecken-Drahtloskommunikationsschnittstelle aufweisen. Ferner ist das erfindungsgemäße System dadurch gekennzeichnet, dass die mobilen Roboter jeweils mindestens eine Kurzstrecken-Drahtloskommunikationsschnittstelle aufweisen und das System zur Durchführung des erfindungsgemäßen Verfahrens zum Übermitteln von Sicherheitsinformationen an eine Robotergruppe und/oder zur Durchführung des erfindungsgemäßen Verfahrens zum Übermitteln von Zustandsinformationen an eine stationäre Kommunikationseinheit eingerichtet ist.

Weiter oben im Zusammenhang mit den erfindungsgemäßen Verfahren beschriebene Ausführungsformen, Ausführungsdetails und Vorteile können sich auch auf das erfindungsgemäße System beziehen.

In bevorzugter Weise ist das System durch eine in den Robotern der Robotergruppe (und ggf. in der Kommunikationseinheit) implementierte Software zur Durchführung des erfindungsgemäßen Verfahrens zum Übermitteln von Sicherheitsinformationen an eine Robotergruppe und/oder zur Durchführung des erfindungsgemäßen Verfahrens zum Übermitteln von Zustandsinformationen an eine stationäre Kommunikationseinheit eingerichtet.

Das erfindungsgemäße Computerprogramm ist für ein System gemäß dem Oberbegriff des Anspruchs 13 vorgesehen. Das heißt, das erfindungsgemäße Computerprogramm ist für ein System vorgesehen, welches eine stationäre Kommunikationseinheit zum Senden und/oder Empfangen von Informationen, die mindestens eine Langstrecken-Drahtloskommunikationsschnittstelle aufweist, sowie eine Robotergruppe mit mehreren mobilen Robotern, die jeweils mindestens eine Langstrecken-Drahtloskommunikationsschnittstelle sowie mindestens eine Kurzstrecken-Drahtloskommunikationsschnittstelle aufweisen, umfasst.

Das erfindungsgemäße Computerprogramm veranlasst ein System zur Durchführung des erfindungsgemäßen Verfahrens zum Übermitteln von Sicherheitsinformationen an eine Robotergruppe und/oder zur Durchführung des erfindungsgemäßen Verfahrens zum Übermitteln von Zustandsinformationen an eine stationäre Kommunikationseinheit, wenn das Computerprogramm auf dem System ausgeführt wird. Mit anderen Worten, durch das erfindungsgemäße Computerprogramm wird ein System gemäß dem Oberbegriff des Anspruchs 13 dazu befähigt, das erfindungsgemäße Verfahren zum Übermitteln von Sicherheitsinformationen an eine Robotergruppe und/oder das erfindungsgemäße Verfahren zum Übermitteln von Zustandsinformationen an eine stationäre Kommunikationseinheit durchzuführen.

Das erfindungsgemäße computerlesbare Speichermedium ist ein Speichermedium, welches das erfindungsgemäße Computerprogramm enthält.

Die bisher gegebene Beschreibung bevorzugter Ausgestaltungen der Erfindung enthält zahlreiche Merkmale, die in den einzelnen abhängigen Ansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit den erfindungsgemäßen Verfahren, dem erfindungsgemäßen System, dem erfindungsgemäßen Computerprogramm und/oder dem erfindungsgemäßen Speichermedium kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels der Erfindung, das im Zusammenhang mit den Figuren näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Es zeigen:

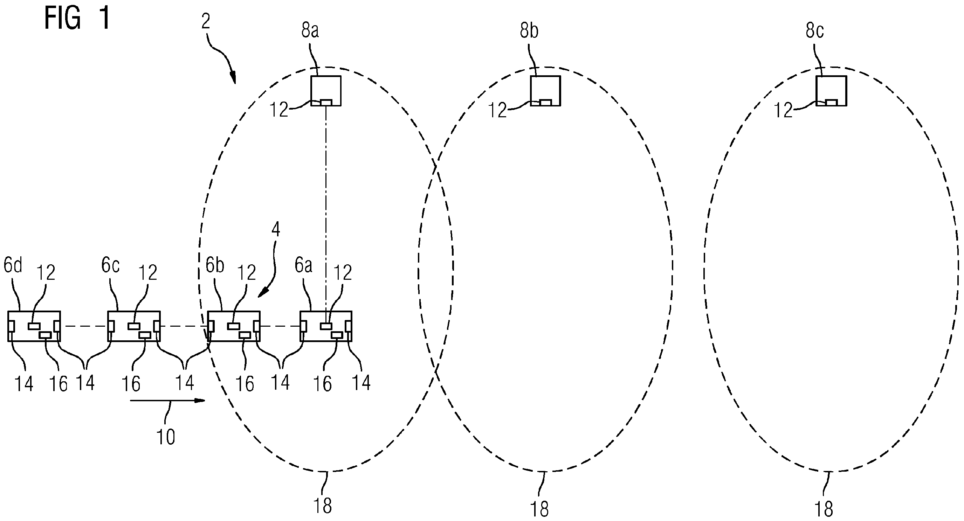

- FIG 1-4: vier verschiedene Zustände eines Systems, welches eine Robotergruppe mit mehreren mobilen Robotern sowie mehrere stationäre Kommunikationseinheiten zum Senden von Sicherheitsinformationen an die Robotergruppe umfasst.

FIG 1 zeigt schematisch ein System 2, welches eine Robotergruppe 4 mit mehreren mobilen Robotern 6a-6d sowie mehreren stationären Kommunikationseinheiten 8a-8c umfasst.

Vorliegend umfasst das System 2 exemplarisch eine erste Kommunikationseinheit 8a, eine zweite Kommunikationseinheit 8b sowie eine dritte Kommunikationseinheit 8c. Gegebenenfalls können die Kommunikationseinheiten 8a-8c miteinander gekoppelt sein, beispielsweise über eine Datenleitung. Eine Kopplung der Kommunikationseinheiten 8a-8c kann zum Beispiel vorhanden sein, wenn das System 2 ein (figürlich nicht dargestelltes) zentrales Steuergerät aufweist, welches die einzelnen Kommunikationseinheiten 8a-8c überwacht und/oder steuert.

Die Robotergruppe 4 des Systems 2 umfasst exemplarisch einen ersten Roboter 6a, einen zweiten Roboter 6b, einen dritten Roboter 6c sowie einen vierten Roboter 6d. Alternativ kann grundsätzlich eine andere Anzahl von Kommunikationseinheiten 8a-8c und/oder von Robotern 6a-6d vorgesehen sein.

Die Roboter 6a-6d der Robotergruppe 4 können beispielsweise dazu genutzt werden, eine Last zu transportieren. Im vorliegenden Ausführungsbeispiel werden die Roboter 6a-6d der Robotergruppe 4 synchron betrieben, beispielsweise um eine auf allen vier Robotern 6a-6d abgestützte Last zu transportieren. Das heißt, die Roboter 6a-6d der Robotergruppe 4 haben die gleiche Bewegungsrichtung 10 und bewegen sich mit der gleichen Geschwindigkeit. In FIG 1 sind die Roboter 6a-6d in einer Reihe hintereinander angeordnet und bewegen sich von links nach rechts.

Besagte stationäre Kommunikationseinheiten 8a-8c dienen unter anderem zur drahtlosen Übermittlung von Sicherheitsinformationen an die Robotergruppe 4. Diese Sicherheitsinformationen können beispielsweise sicherheitsrelevante Steuerbefehle für die Robotergruppe 4, wie zum Beispiel einen Not-Aus-Befehl oder dergleichen, umfassen.

Darüber hinaus ist jeder der Roboter 6a-6d mit einem Prozessor ausgestattet, auf welchem ein Steueralgorithmus ausgeführt wird, welcher von den Kommunikationseinheiten 8a-8c versendete Sicherheitsinformationen verarbeitet und den jeweiligen Roboter 6a-6d zur Durchführung entsprechender Aktionen veranlasst.

Im vorliegenden Ausführungsbeispiel ist jede der Kommunikationseinheiten 8a-8c mit einer Langstrecken-Drahtloskommunikationsschnittstelle 12 ausgestattet, während die Roboter 6a-6d der Robotergruppe 4 jeweils mit einer Langstrecken-Drahtloskommunikationsschnittstelle 12 sowie zwei Kurzstrecken-Drahtloskommunikationsschnittstellen 14 ausgestattet sind. Grundsätzlich können/kann die jeweilige Kommunikationseinheit 8a-8c und/oder der jeweilige Roboter 6a-6d, insbesondere aus Redundanzgründen, eine größere Anzahl von Drahtloskommunikationsschnittstellen 12, 14 des jeweiligen Typs (Langstrecken-Drahtloskommunikationsschnittstellen 12 bzw. Kurzstrecken-Drahtloskommunikationsschnittstellen 14) aufweisen.

Als Drahtloskommunikationsschnittstellen 12, 14 kommen standardisierte Drahtloskommunikationsschnittstellen zum Einsatz, welche zur Datenübertragung von Sicherheitsinformationen, insbesondere von Sicherheitsinformationen gemäß SIL 3, zertifiziert sind. Bei der jeweiligen Langstrecken-Drahtloskommunikationsschnittstelle 12 handelt es sich im vorliegenden Ausführungsbeispiel um eine WLAN-Schnittstelle, während es sich bei der jeweiligen Kurzstrecken-Drahtloskommunikationsschnittstelle 14 um eine Bluetooth-Schnittstelle handelt. Zur Datenübertragung nutzt die jeweilige Drahtloskommunikationsschnittstelle 12, 14 ein Sicherheitsprotokoll, wie zum Beispiel das PROFIsafe-Protokoll des Profinet-Standards.

Des Weiteren ist der jeweilige Roboter 6a-6d der Robotergruppe 4 mit einer Sensoreinheit 16 zum Überwachen seines Zustands sowie zum Überwachen des Zustands seiner Umgebung ausgestattet. Mithilfe seiner Sensoreinheit 16 überwacht der jeweilige Roboter 6a-6d seinen Zustand sowie den Zustand seiner Umgebung und erzeugt dabei Zustandsinformationen, die zum Beispiel Informationen über seine Geschwindigkeit, seine Position, seine Bewegungsrichtung und/oder seine Abstände zu benachbarten Robotern 6a-6d und/oder zu Hindernissen umfassen können.

Mithilfe ihrer Kurzstrecken-Drahtloskommunikationsschnittstellen 14 sind die Roboter 6a-6d der Robotergruppe 4 jeweils direkt oder indirekt miteinander verbunden, wobei jeder der Roboter 6a-6d jeweils mit einem oder mit zweien der anderen Roboter 6a-6d direkt verbunden ist.

In FIG 1 ist von jeder der Kommunikationseinheiten 8a-8c ihr jeweiliger Kommunikationsbereich 18 dargestellt, innerhalb dessen die jeweilige Kommunikationseinheit 8a-8c über ihre Langstrecken-Drahtloskommunikationsschnittstelle 12 Daten bzw. Information senden und empfangen kann. Wie aus FIG 1 ersichtlich ist, überlappen sich der Kommunikationsbereich 18 der ersten Kommunikationseinheit 8a und der Kommunikationsbereich 18 der zweiten Kommunikationseinheit 8b. Der Kommunikationsbereich 18 der dritten Kommunikationseinheit 8c hingegen überlappt sich nicht mit den beiden anderen Kommunikationsbereichen 18.

Bei dem in FIG 1 dargestellten Zustand des Systems 2 befinden sich der erste Roboter 6a und der zweite Roboter 6b der Robotergruppe 4 innerhalb des Kommunikationsbereichs 18 der ersten Kommunikationseinheit 8a, wohingegen die beiden anderen Roboter 6c, 6d der Robotergruppe 4 außerhalb des Kommunikationsbereichs 18 der ersten Kommunikationseinheit 8a sowie außerhalb der Kommunikationsbereiche 18 der beiden anderen Kommunikationseinheiten 8b, 8c befinden.

In diesem Zustand wird der erste Roboter 6a der Robotergruppe 4 hinsichtlich einer Kommunikation mit der ersten Kommunikationseinheit 8a als Master-Roboter betrieben, wohingegen die anderen Roboter 6b-6d der Robotergruppe 4 hinsichtlich der Kommunikation mit der ersten Kommunikationseinheit 8a als Slave-Roboter betrieben werden.

Der erste Roboter 6a ist über seine Langstrecken-Drahtloskommunikationsschnittstelle 12 mit der ersten Kommunikationseinheit 8a verbunden und empfängt über seine Langstrecken-Drahtloskommunikationsschnittstelle 12 Sicherheitsinformationen von der ersten Kommunikationseinheit 8a. Über eine seiner Kurzstrecken-Drahtloskommunikationsschnittstellen 14 ist der erste Roboter 6a zudem mit dem zweiten Roboter 6b der Robotergruppe 4 verbunden. Der erste Roboter 6a leitet über besagte Kurzstrecken-Drahtloskommunikationsschnittstelle 14 die von der ersten Kommunikationseinheit 8a übermittelten Sicherheitsinformationen an den zweiten Roboter 6b der Robotergruppe 4 weiter.

Der zweite Roboter 6b ist über eine seiner Kurzstrecken-Drahtloskommunikationsschnittstellen 14 mit dem dritten Roboter 6c der Robotergruppe 4 verbunden und leitet die vom ersten Roboter 6a übermittelten Sicherheitsinformationen der ersten Kommunikationseinheit 8a an den dritten Roboter 6c weiter. Das heißt, der zweite Roboter 6b fungiert gegenüber dem dritten Roboter 6c hinsichtlich der Kommunikation mit der ersten Kommunikationseinheit 8a als Submaster-Roboter.

Der dritte Roboter 6c ist seinerseits über eine seiner Kurzstrecken-Drahtloskommunikationsschnittstellen 14 mit dem vierten Roboter 6d der Robotergruppe 4 verbunden und leitet die vom zweiten Roboter 6b übermittelten Sicherheitsinformationen der ersten Kommunikationseinheit 8a an den vierten Roboter 6d weiter. Das heißt, der dritte Roboter 6c fungiert gegenüber dem vierten Roboter 6d hinsichtlich der Kommunikation mit der ersten Kommunikationseinheit 8a als Submaster-Roboter.

Anders ausgedrückt, die vom ersten Roboter 6a der Robotergruppe 4 empfangenen Sicherheitsinformationen der ersten Kommunikationseinheit 8a werden über die Kurzstrecken-Drahtloskommunikationsschnittstellen 14 seriell an die anderen Roboter 6b-6d der Robotergruppe 4 weitergeleitet, wobei von jedem der ersten drei Robotern 6a-6c der Robotergruppe 4 die Sicherheitsinformationen der ersten Kommunikationseinheit 8a über eine seiner Kurzstrecken-Drahtloskommunikationsschnittstellen 14 an genau einen der anderen Roboter der Robotergruppe 4 direkt weitergeleitet werden.

In FIG 1 sowie in den weiteren Figuren sind die Kurzstrecken-Verbindungen, durch welche die Roboter 6a-6d der Robotergruppe 4 untereinander verbunden sind, als gestrichelte Linien dargestellt, während die Langstrecken-Verbindungen, durch welche die Robotergruppe 4 mit der jeweiligen Kommunikationseinheit 8a-8c verbunden ist, als stichpunktierte Linien dargestellt sind.

Da der erste Roboter 6a als einziger Roboter der Robotergruppe 4 über seine Langstrecken-Drahtloskommunikationsschnittstelle 12 direkt mit der ersten Kommunikationseinheit 8a verbunden ist, ist nur eine einzige Punkt-zu-Punkt-Verbindung zwischen der ersten Kommunikationseinheit 8a und der Robotergruppe 4 erforderlich, um Sicherheitsinformationen von der ersten Kommunikationseinheit 8a an die Robotergruppe 4 zu übermitteln.

Zur Überwachung der Robotergruppe 4 durch die erste Kommunikationseinheit 8a übermittelt der erste Roboter 6a die von ihm erzeugten Zustandsinformationen sowie die von den anderen Robotern 6b-6d der Robotergruppe 4 erzeugten Zustandsinformationen, welche dem ersten Roboter 6a von den anderen Robotern 6b-6d über die Kurzstrecken-Drahtloskommunikationsschnittstellen 14 übermittelt werden, über seine Langstrecken-Drahtloskommunikationsschnittstelle 12 an die erste Kommunikationseinheit 8a.

Verlässt der erste Roboter 6a der Robotergruppe 4 den Kommunikationsbereich der ersten Kommunikationseinheit 8a, wird ein anderer Roboter 6b-6d der Robotergruppe 4 hinsichtlich der Kommunikation mit der ersten Kommunikationseinheit 8a als Master-Roboter betrieben. Der erste Roboter 6a der Robotergruppe 4 wird dann hinsichtlich der Kommunikation mit der ersten Kommunikationseinheit 8a als Slave-Roboter betrieben.

Aus den obigen Ausführungen folgt, dass es nicht erforderlich ist, dass sich alle Roboter 6a-6d der Robotergruppe 4 innerhalb eines Kommunikationsbereichs 18 einer Kommunikationseinheit 8a-8c befinden, von welcher die Robotergruppe 4 Sicherheitsinformationen erhält bzw. an welche die Robotergruppe 4 Zustandsinformationen übermittelt, sofern sich mindestens einer der Roboter 6a-6d zumindest teilweise innerhalb des Kommunikationsbereichs 18 der entsprechenden Kommunikationseinheit 8a-8c befindet und über seine Langstrecken-Drahtloskommunikationsschnittstelle 12 mit der entsprechenden Kommunikationseinheit 8a-8c verbunden ist.

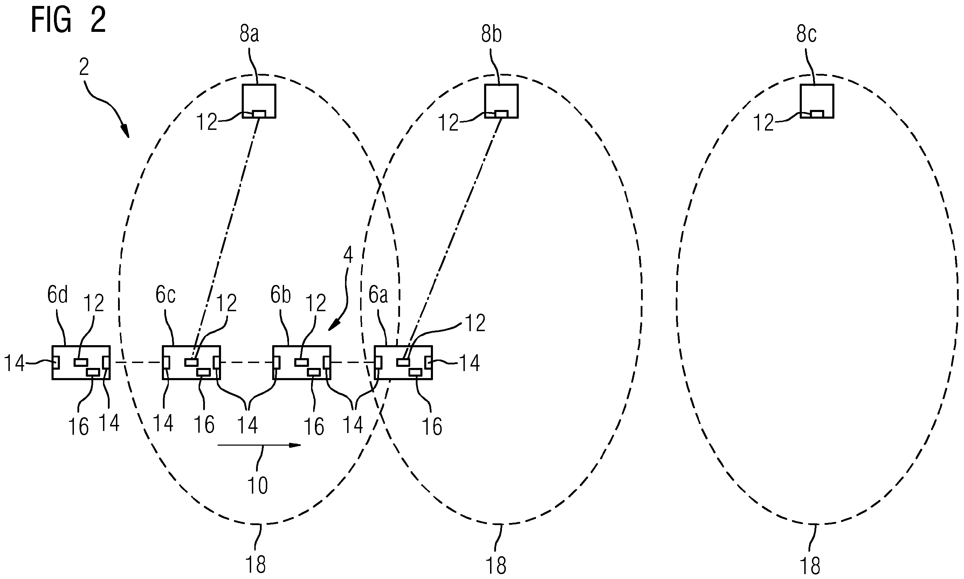

FIG 2 zeigt das System 2 in einem Zustand, in welchem sich der erste Roboter 6a der Robotergruppe 4 innerhalb des Kommunikationsbereichs 18 der zweiten Kommunikationseinheit 8b (und noch teilweise innerhalb des Kommunikationsbereichs 18 der ersten Kommunikationseinheit 8a) befindet und sich der zweite Roboter 6b sowie der dritte Roboter 6c der Robotergruppe 4 innerhalb des Kommunikationsbereichs 18 der ersten Kommunikationseinheit 8a befinden. Der vierte Roboter 6d der Robotergruppe 4 befindet sich hingegen außerhalb der Kommunikationsbereiche 18 aller drei Kommunikationseinheiten 8a-8c.

In diesem Zustand wird der dritte Roboter 6c der Robotergruppe 4 hinsichtlich der Kommunikation mit der ersten Kommunikationseinheit 8a als Master-Roboter betrieben, wohingegen die anderen Roboter 6a, 6b, 6d der Robotergruppe 4 hinsichtlich der Kommunikation mit der ersten Kommunikationseinheit 8a als Slave-Roboter betrieben werden.

Der dritte Roboter 6c ist über seine Langstrecken-Drahtloskommunikationsschnittstelle 12 mit der ersten Kommunikationseinheit 8a verbunden und empfängt über seine Langstrecken-Drahtloskommunikationsschnittstelle 12 Sicherheitsinformationen von der ersten Kommunikationseinheit 8a. Über eine seiner Kurzstrecken-Drahtloskommunikationsschnittstellen 14 ist der dritte Roboter 6c mit dem zweiten Roboter 6b der Robotergruppe 4 verbunden. Der dritte Roboter 6c leitet über besagte Kurzstrecken-Drahtloskommunikationsschnittstelle 14 die von der ersten Kommunikationseinheit 8a übermittelten Sicherheitsinformationen an den zweiten Roboter 6b der Robotergruppe 4 weiter.

Ferner ist der zweite Roboter 6b über eine seiner Kurzstrecken-Drahtloskommunikationsschnittstellen 14 mit dem ersten Roboter 6a der Robotergruppe 4 verbunden und leitet die Sicherheitsinformationen der ersten Kommunikationseinheit 8a an den ersten Roboter 6a weiter. Das heißt, der zweite Roboter 6b fungiert gegenüber dem ersten Roboter 6a hinsichtlich der Kommunikation mit der ersten Kommunikationseinheit 8a als Submaster-Roboter.

Des Weiteren ist der dritte Roboter 6c über eine seiner Kurzstrecken-Drahtloskommunikationsschnittstellen 14 mit dem vierten Roboter 6d der Robotergruppe 4 verbunden. Über diese Kurzstrecken-Drahtloskommunikationsschnittstelle 14 leitet der dritte Roboter 6c die von der ersten Kommunikationseinheit 8a übermittelten Sicherheitsinformationen an den vierten Roboter 6d der Robotergruppe 4 weiter.

Zur Überwachung der Robotergruppe 4 durch die erste Kommunikationseinheit 8a übermittelt der dritte Roboter 6c die von ihm erzeugten Zustandsinformationen sowie die von den anderen Robotern 6a, 6b, 6d der Robotergruppe 4 erzeugten Zustandsinformationen, welche dem dritten Roboter 6c von den anderen Robotern 6a, 6b, 6d über die Kurzstrecken-Drahtloskommunikationsschnittstellen 14 übermittelt werden, über seine Langstrecken-Drahtloskommunikationsschnittstelle 12 an die erste Kommunikationseinheit 8a.

Darüber hinaus wird in dem Zustand, der in FIG 2 dargestellt ist, der erste Roboter 6a der Robotergruppe 4 hinsichtlich einer Kommunikation mit der zweiten Kommunikationseinheit 8b als Master-Roboter betrieben, wohingegen die anderen Roboter 6b-6d hinsichtlich der Kommunikation mit der zweiten Kommunikationseinheit 8b als Slave-Roboter betrieben werden.

Die Übermittlung von Sicherheitsinformationen von der zweiten Kommunikationseinheit 8b an die einzelnen Roboter 6a-6d der Robotergruppe 4 sowie die Übermittlung von Zustandsinformationen der einzelnen Roboter 6a-6d der Robotergruppe 4 an die zweite Kommunikationseinheit 8b erfolgen analog zu der im Zusammenhang mit FIG 1 beschriebenen Art der Informationsübermittlung zwischen der ersten Kommunikationseinheit 8a und der Robotergruppe 4.

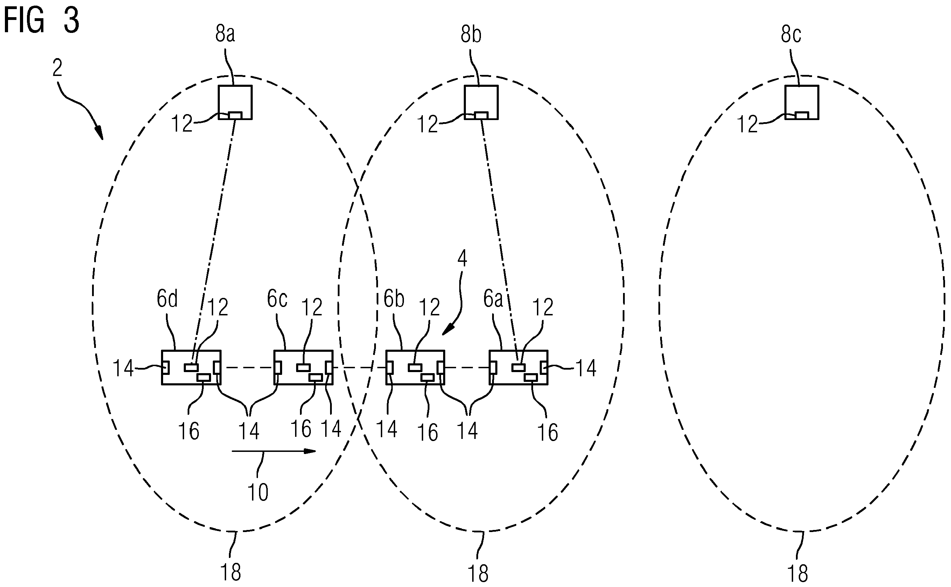

FIG 3 zeigt das System 2 in einem Zustand, in welchem sich der erste Roboter 6a sowie der zweite Roboter 6b der Robotergruppe 4 innerhalb des Kommunikationsbereichs 18 der zweiten Kommunikationseinheit 8b befinden und sich der dritte Roboter 6c sowie der vierte Roboter 6d der Robotergruppe 4 innerhalb des Kommunikationsbereichs 18 der ersten Kommunikationseinheit 8a befinden.

In diesem Zustand wird der vierte Roboter 6d der Robotergruppe 4 hinsichtlich der Kommunikation mit der ersten Kommunikationseinheit 8a als Master-Roboter betrieben, wohingegen die anderen Roboter 6a-6c der Robotergruppe 4 hinsichtlich der Kommunikation mit der ersten Kommunikationseinheit 8a als Slave-Roboter betrieben werden.

Der vierte Roboter 6d ist über seine Langstrecken-Drahtloskommunikationsschnittstelle 12 mit der ersten Kommunikationseinheit 8a verbunden und empfängt über seine Langstrecken-Drahtloskommunikationsschnittstelle 12 Sicherheitsinformationen von der ersten Kommunikationseinheit 8a.

Die Weiterleitung von Sicherheitsinformationen der ersten Kommunikationseinheit 8a an die anderen Roboter 6a-6c der Robotergruppe 4 erfolgt analog zu der im Zusammenhang mit FIG 1 beschriebenen Art der Weiterleitung von Sicherheitsinformationen zwischen den einzelnen Robotern 6a-6d der Robotergruppe 4, jedoch in umgekehrter Übertragungsrichtung. Das heißt, die Sicherheitsinformationen der ersten Kommunikationseinheit 8a werden in diesem Zustand vom vierten Roboter 6d an den dritten Roboter 6c weitergeleitet. Dieser leitet die Sicherheitsinformationen an den zweiten Roboter 6b der Robotergruppe 4 weiter, welche seinerseits die Sicherheitsinformationen an den ersten Roboter 6a weiterleitet.

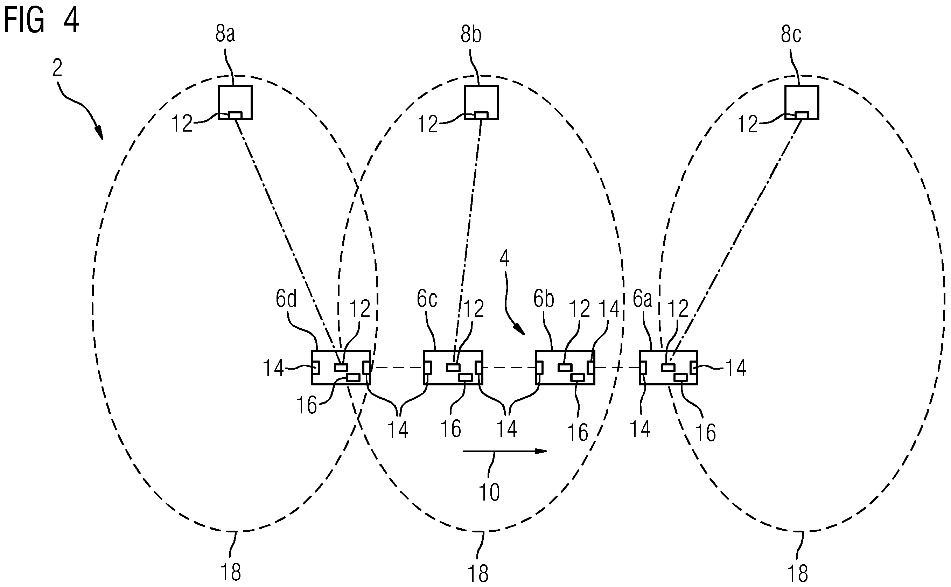

FIG 4 zeigt das System 2 in einem Zustand, in welchem sich der erste Roboter 6a der Robotergruppe 4 teilweise innerhalb des Kommunikationsbereichs 18 der dritten Kommunikationseinheit 8c befindet, sich der zweite Roboter 6b sowie der dritte Roboter 6c der Robotergruppe 4 innerhalb des Kommunikationsbereichs 18 der zweiten Kommunikationseinheit 8b befinden und sich der vierte Roboter 6d der Robotergruppe 4 innerhalb des Kommunikationsbereichs 18 der ersten Kommunikationseinheit 8a (und teilweise innerhalb des Kommunikationsbereichs 18 der zweiten Kommunikationseinheit 8b) befindet.

In diesem Zustand wird der erste Roboter 6a der Robotergruppe 4 hinsichtlich einer Kommunikation mit der dritten Kommunikationseinheit 8c als Master-Roboter betrieben, wohingegen die anderen Roboter 6b-6d der Robotergruppe 4 hinsichtlich der Kommunikation mit der dritten Kommunikationseinheit 8c als Slave-Roboter betrieben werden. Ferner wird in diesem Zustand der dritte Roboter 6c der Robotergruppe 4 hinsichtlich der Kommunikation mit der zweiten Kommunikationseinheit 8b als Master-Roboter betrieben, während die anderen Roboter 6a, 6b, 6d der Robotergruppe 4 hinsichtlich der Kommunikation mit der ersten zweiten 8b als Slave-Roboter betrieben werden. Außerdem wird in diesem Zustand der vierte Roboter 6d der Robotergruppe 4 hinsichtlich der Kommunikation mit der ersten Kommunikationseinheit 8a als Master-Roboter betrieben, während die anderen Roboter 6a-6c der Robotergruppe 4 hinsichtlich der Kommunikation mit der ersten Kommunikationseinheit 8a als Slave-Roboter betrieben werden.

Der erste Roboter 6a ist über seine Langstrecken-Drahtloskommunikationsschnittstelle 12 mit der dritten Kommunikationseinheit 8c verbunden, empfängt über seine Langstrecken-Drahtloskommunikationsschnittstelle 12 Sicherheitsinformationen von der dritten Kommunikationseinheit 8c und übermittelt über seine Langstrecken-Drahtloskommunikationsschnittstelle 12 Zustandsinformationen der Robotergruppe 4 an die dritte Kommunikationseinheit 8c. Der dritte Roboter 6c ist über seine Langstrecken-Drahtloskommunikationsschnittstelle 12 mit der zweiten Kommunikationseinheit 8b verbunden, empfängt über seine Langstrecken-Drahtloskommunikationsschnittstelle 12 Sicherheitsinformationen von der zweiten Kommunikationseinheit 8b und übermittelt über seine Langstrecken-Drahtloskommunikationsschnittstelle 12 Zustandsinformationen der Robotergruppe 4 an die zweite Kommunikationseinheit 8b. Der vierte Roboter 6d ist über seine Langstrecken-Drahtloskommunikationsschnittstelle 12 mit der ersten Kommunikationseinheit 8a verbunden, empfängt über seine Langstrecken-Drahtloskommunikationsschnittstelle 12 Sicherheitsinformationen von der ersten Kommunikationseinheit 8a und übermittelt über seine Langstrecken-Drahtloskommunikationsschnittstelle 12 Zustandsinformationen der Robotergruppe 4 an die erste Kommunikationseinheit 8a.

Die Weiterleitung von Sicherheitsinformationen der jeweiligen Kommunikationseinheit 8a-8c innerhalb der Robotergruppe 4 erfolgt jeweils analog zu der im Zusammenhang FIG 1, FIG 2 und FIG 3 beschriebenen Art der Weiterleitung von Sicherheitsinformationen.

Wie aus den obigen Ausführungen hervorgeht, kann die Robotergruppe 4 auch dann, wenn sich die Roboter 6a-6d jeweils nur im Kommunikationsbereich 18 einer einzigen Kommunikationseinheit 8a-8c aufhalten, gleichzeitig von mehreren Kommunikationseinheiten 8a-8c drahtlos Sicherheitsinformationen erhalten sowie gleichzeitig an mehrere Kommunikationseinheiten 8a-8c drahtlos Zustandsinformationen übermitteln, solange mindestens ein Roboter 6a-6c der Robotergruppe 4 über seine Langstrecken-Drahtloskommunikationsschnittstelle 12 eine Verbindung zu der jeweiligen Kommunikationseinheit 8a-8c aufweist, und zwar unabhängig davon, ob sich die Kommunikationsbereiche 18 der Kommunikationseinheiten 8a-8c überlappen oder nicht.

Zudem ist es möglich, dass sich mindestens ein Roboter 6a-6d der Robotergruppe 4 außerhalb der Kommunikationsbereiche 18, beispielsweise in einem Raumbereich zwischen zwei Kommunikationsbereichen 18, auffällt und dennoch (auf indirektem Wege) drahtlos Sicherheitsinformationen von einer oder mehreren der Kommunikationseinheiten 8a-8c erhalten und Zustandsinformationen an eine oder mehrere der Kommunikationseinheiten 8a-8c übermitteln kann, sofern mindestens ein Roboter 6a-6d der Robotergruppe 4 über seine Langstrecken-Drahtloskommunikationsschnittstelle 12 eine Verbindung zu der jeweiligen Kommunikationseinheit 8a-8c aufweist.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

### Bezugszeichenliste

- 2: System
- 4: Robotergruppe
- 6a: Roboter
- 6b: Roboter
- 6c: Roboter
- 6d: Roboter
- 8a: Kommunikationseinheit
- 8b: Kommunikationseinheit
- 8c: Kommunikationseinheit
- 10: Bewegungsrichtung
- 12: Langstrecken-Drahtloskommunikationsschnittstelle
- 14: Kurzstrecken-Drahtloskommunikationsschnittstelle
- 16: Sensoreinheit
- 18: Kommunikationsbereich

## Patentansprüche

1. Verfahren zum Übermitteln von Sicherheitsinformationen an eine Robotergruppe (4), bei dem die Robotergruppe (4) mehrere mobile Roboter (6a-6d) umfasst und die Sicherheitsinformationen von einer stationären Kommunikationseinheit (8a-8c) drahtlos an die Robotergruppe (4) übermittelt werden, **dadurch gekennzeichnet, dass** ein Roboter (6a-6d) der Robotergruppe (4) hinsichtlich einer Kommunikation mit der stationären Kommunikationseinheit (8a-8c) als Master-Roboter betrieben wird, welcher über eine Langstrecken-Drahtloskommunikationsschnittstelle (12) mit der stationären Kommunikationseinheit (8a-8c) verbunden ist und an den von der stationären Kommunikationseinheit (8a-8c) über die Langstrecken-Drahtloskommunikationsschnittstelle (12) die Sicherheitsinformationen übermittelt werden, und mindestens ein Roboter (6a-6d) der Robotergruppe (4) hinsichtlich der Kommunikation mit der stationären Kommunikationseinheit (8a-8c) als Slave-Roboter betrieben wird, an welchen vom Master-Roboter über eine Kurzstrecken-Drahtloskommunikationsschnittstelle (14) die vom Master-Roboter empfangenen Sicherheitsinformationen weitergeleitet werden.

2. Verfahren zum Übermitteln von Zustandsinformationen an eine stationäre Kommunikationseinheit (8a-8c), bei dem die Zustandsinformationen von einer mehrere mobile Roboter (6a-6d) umfassenden Robotergruppe (4) drahtlos an die stationäre Kommunikationseinheit (8a-8c) übermittelt werden,
**dadurch gekennzeichnet, dass** ein Roboter (6a-6d) der Robotergruppe hinsichtlich einer Kommunikation mit der stationären Kommunikationseinheit (8a-8c) als Master-Roboter betrieben wird, welcher über eine Langstrecken-Drahtloskommunikationsschnittstelle (12) mit der stationären Kommunikationseinheit (8a-8c) verbunden ist und von dem über die Langstrecken-Drahtloskommunikationsschnittstelle (12) die Zustandsinformationen an die stationäre Kommunikationseinheit (8a-8c) übermittelt werden, und mindestens ein Roboter (6a-6d) der Robotergruppe (4) hinsichtlich der Kommunikation mit der stationären Kommunikationseinheit (8a-8c) als Slave-Roboter betrieben wird, von welchem über eine Kurzstrecken-Drahtloskommunikationsschnittstelle (14) zumindest einen Teil der vom Master-Roboter an die Kommunikationseinheit (8a-8c) zu übermittelnden Zustandsinformationen an den Master-Roboter weitergeleitet werden.

3. Verfahren nach Anspruch 1 oder 2,
**dadurch gekennzeichnet, dass** hinsichtlich der Kommunikation mit der stationären Kommunikationseinheit (8a-8c) bis auf den Master-Roboter alle Roboter (6a-6d) der Robotergruppe (4) als Slave-Roboter betrieben werden.

4. Verfahren nach einem der voranstehenden Ansprüche, **dadurch gekennzeichnet, dass** als Langstrecken-Drahtloskommunikationsschnittstelle (12) eine WLAN-Schnittstelle oder eine Mobilfunkschnittstelle verwendet wird und/oder dass als Kurzstrecken-Drahtloskommunikationsschnittstelle (14) eine Bluetooth-Schnittstelle oder eine ZigBee-Schnittstelle verwendet wird.

5. Verfahren nach einem der voranstehenden Ansprüche, **dadurch gekennzeichnet, dass** die Robotergruppe (4) mindestens drei mobile Roboter (6a-6d) umfasst und mindestens einer der Slave-Roboter als Submaster-Roboter betrieben wird, an welchen die vom Master-Roboter empfangenen Sicherheitsinformationen über eine Kurzstrecken-Drahtloskommunikationsschnittstelle (14) übermittelt werden und von dem diese Informationen über eine weitere Kurzstrecken-Drahtloskommunikationsschnittstelle (14) an mindestens einen anderen Slave-Roboter der Robotergruppe (4) weitergeleitet werden.

6. Verfahren nach einem der voranstehenden Ansprüche, **dadurch gekennzeichnet, dass** Daten unter den Robotern (6a-6d) der Robotergruppe (4) seriell weitergeleitet werden, wobei von dem jeweiligen Roboter (6a-6d) der Robotergruppe (4) Daten über eine Kurzstrecken-Drahtloskommunikationsschnittstelle (14) an maximal einen der anderen Roboter (6a-6d) der Robotergruppe (4) direkt weitergeleitet werden.

7. Verfahren nach einem der voranstehenden Ansprüche, **dadurch gekennzeichnet, dass** die stationäre Kommunikationseinheit (8a-8c) einen Kommunikationsbereich (18) aufweist, innerhalb dessen die Kommunikationseinheit (8a-8c) über eine Langstrecken-Drahtloskommunikationsschnittstelle (12) drahtlos Daten senden und empfangen kann, wobei sich der Master-Roboter der Robotergruppe zur Kommunikation mit der stationären Kommunikationseinheit (8a-8c) innerhalb des Kommunikationsbereichs befinden muss, wobei der Master-Roboter die Daten an mindestens einen Slave-Roboter der Robotergruppe (4), der sich zumindest temporär außerhalb des Kommunikationsbereichs (18) der stationären Kommunikationseinheit (8a-8c) befinden kann, übermittelt.

8. Verfahren nach einem der voranstehenden Ansprüche, **dadurch gekennzeichnet, dass** von mindestens einem der beiden Typen von Drahtloskommunikationsschnittstellen (12, 14), vorzugsweise jedem der beiden Typen von Drahtloskommunikationsschnittstellen (12, 14), ein Sicherheitsprotokoll zur Datenübertragung genutzt wird.

9. Verfahren nach Anspruch 8,
**dadurch gekennzeichnet, dass** das PROFIsafe-Protokoll des Profinet-Standards als Sicherheitsprotokoll genutzt wird.

10. Verfahren nach einem der voranstehenden Ansprüche, **dadurch gekennzeichnet, dass** die stationäre Kommunikationseinheit (8a-8c) einen Kommunikationsbereich (18) aufweist, innerhalb dessen die Kommunikationseinheit (8a-8c) über eine Langstrecken-Drahtloskommunikationsschnittstelle (12) drahtlos Daten senden und empfangen kann, wobei, wenn der Master-Roboter den Kommunikationsbereich (18) der Kommunikationseinheit (8a-8c) verlässt, ein Slave-Roboter der Robotergruppe (4) hinsichtlich der Kommunikation mit der stationären Kommunikationseinheit (8a-8c) zum neuen Master-Roboter wird und der bisherige Master-Roboter hinsichtlich der Kommunikation mit der stationären Kommunikationseinheit (8a-8c) zu einem Slave-Roboter wird.

11. Verfahren nach einem der voranstehenden Ansprüche, **dadurch gekennzeichnet, dass** die stationäre Kommunikationseinheit (8a-8c) einen Kommunikationsbereich (18) aufweist, innerhalb dessen die Kommunikationseinheit (8a-8c) über eine Langstrecken-Drahtloskommunikationsschnittstelle (12) drahtlos Daten senden und empfangen kann, ein Roboter (6a-6d) der Robotergruppe (4), welcher sich außerhalb des Kommunikationsbereichs (18) der besagten Kommunikationseinheit (8a-8c) und zugleich zumindest teilweise innerhalb eines solchen Kommunikationsbereichs (18) einer zweiten stationären Kommunikationseinheit (8a-8c) befindet, hinsichtlich einer Kommunikation mit der zweiten stationären Kommunikationseinheit (8a-8c) als Master-Roboter betrieben wird, welcher über eine Langstrecken-Drahtloskommunikationsschnittstelle (12) mit der zweiten stationären Kommunikationseinheit (8a-8c) verbunden ist und an den über diese Langstrecken-Drahtloskommunikationsschnittstelle (12) von der zweiten stationären Kommunikationseinheit (8a-8c) Sicherheitsinformationen übermittelt werden, und mindestens ein Roboter (6a-6d) der Robotergruppe (4) hinsichtlich der Kommunikation mit der zweiten stationären Kommunikationseinheit (8a-8c) als Slave-Roboter betrieben wird, an welchen von letztgenanntem Master-Roboter über eine Kurzstrecken-Drahtloskommunikationsschnittstelle (14) die von letztgenanntem Master-Roboter empfangenen Sicherheitsinformationen weitergeleitet werden.

12. Verfahren nach einem der voranstehenden Ansprüche, **dadurch gekennzeichnet, dass** die mobilen Roboter (6a-6d) der Robotergruppe (4) derart betrieben werden, dass sich die Roboter (6a-6d) synchron zueinander bewegen.

13. System (2), umfassend mindestens eine stationäre Kommunikationseinheit (8a-8c) zum Senden und/oder Empfangen von Informationen, die mindestens eine Langstrecken-Drahtloskommunikationsschnittstelle (12) aufweist, sowie eine Robotergruppe (4) mit mehreren mobilen Robotern (6a-6d), die jeweils mindestens eine Langstrecken-Drahtloskommunikationsschnittstelle (12) aufweisen,
**dadurch gekennzeichnet, dass** die mobilen Roboter (6a-6d) jeweils mindestens eine Kurzstrecken-Drahtloskommunikationsschnittstelle (14) aufweisen und das System (2) zur Durchführung eines Verfahrens nach einem der voranstehenden Ansprüche eingerichtet ist.

14. Computerprogramm für ein System (2) gemäß dem Oberbegriff des Anspruchs 13,
**dadurch gekennzeichnet, dass** das Computerprogramm das System (2) zur Durchführung eines Verfahrens nach einem der Ansprüche 1 bis 12 veranlasst, wenn das Computerprogramm auf dem System (2) ausgeführt wird.

15. Computerlesbares Speichermedium mit einem Computerprogramm nach Anspruch 14.

## Claims

1. Method for transmitting safety information to a group of robots (4), in which the group of robots (4) comprises a plurality of mobile robots (6a-6d) and the safety information is transmitted wirelessly by a stationary communication unit (8a-8c) to the group of robots (4),
**characterised in that** one robot (6a-6d) of the group of robots (4), with regard to communication with the stationary communication unit (8a-8c), is operated as a master robot which is connected to the stationary communication unit (8a-8c) via a long-distance wireless communication interface (12) and to which the safety information is transmitted by the stationary communication unit (8a-8c) via the long-distance wireless communication interface (12), and at least one robot (6a-6d) of the group of robots (4), with regard to the communication with the stationary communication unit (8a-8c), is operated as a slave robot to which the safety information received by the master robot is forwarded by the master robot via a short-distance wireless communication interface (14).

2. Method for transmitting status information to a stationary communication unit (8a-8c), in which the status information is transmitted wirelessly by a group of robots (4), which comprises a plurality of mobile robots (6a-6d), to the stationary communication unit (8a-8c),
**characterised in that** one robot (6a-6d) of the group of robots, with regard to communication with the stationary communication unit (8a-8c), is operated as a master robot which is connected to the stationary communication unit (8a-8c) via a long-distance wireless communication interface (12) and by which the status information is transmitted to the stationary communication unit (8a-8c) via the long-distance wireless communication interface (12), and at least one robot (6a-6d) of the group of robots (4), with regard to the communication with the stationary communication unit (8a-8c), is operated as a slave robot by which at least some of the status information to be transmitted by the master robot to the communication unit (8a-8c) is forwarded via a short-distance wireless communication interface (14).

3. Method according to claim 1 or 2,
**characterised in that**, with regard to the communication with the stationary communication unit (8a-8c), all robots (6a-6d) of the group of robots (4) are operated as slave robots, with the exception of the master robot.

4. Method according to one of the preceding claims, **characterised in that** a WLAN interface or a mobile radio interface is used as long-distance wireless communication interface (12) and/or a Bluetooth interface or a ZigBee interface is used as short-distance wireless communication interface (14).

5. Method according to one of the preceding claims, **characterised in that** the group of robots (4) comprises at least three mobile robots (6a-6d) and at least one of the slave robots is operated as a sub-master robot to which the safety information received by the master robot is transmitted via a short-distance wireless communication interface (14) and by which this information is forwarded to at least one other slave robot of the group of robots (4) via a further short-distance wireless communication interface (14).

6. Method according to one of the preceding claims, **characterised in that** data is forwarded in series among the robots (6a-6d) of the group of robots (4), wherein data is forwarded by each robot (6a-6d) of the group of robots (4) directly to at most one of the other robots (6a-6d) of the group of robots (4) via a short-distance wireless communication interface (14).

7. Method according to one of the preceding claims, **characterised in that** the stationary communication unit (8a-8c) has a communication range (18), within which the communication unit (8a-8c) is able to send and receive data wirelessly via a long-distance wireless communication interface (12), wherein the master robot of the group of robots must be located within the communication range for communication with the stationary communication unit (8a-8c), wherein the master robot transmits the data to at least one slave robot of the group of robots (4) that can be located, at least temporarily, outside of the communication range (18) of the stationary communication unit (8a-8c).

8. Method according to one of the preceding claims, **characterised in that** a safety protocol for data transfer is used by at least one of the two types of wireless communication interface (12, 14), preferably each of the two types of wireless communication interface (12, 14).

9. Method according to claim 8,
**characterised in that** the PROFIsafe protocol of the Profinet standard is used as safety protocol.

10. Method according to one of the preceding claims, **characterised in that** the stationary communication unit (8a-8c) has a communication range (18), within which the communication unit (8a-8c) is able to send and receive data wirelessly via a long-distance wireless communication interface (12), wherein, when the master robot leaves the communication range (18) of the communication unit (8a-8c), a slave robot of the group of robots (4) is made the new master robot with regard to the communication with the stationary communication unit (8a-8c) and the previous master robot is made a slave robot with regard to the communication with the stationary communication unit (8a-8c).

11. Method according to one of the preceding claims, **characterised in that** the stationary communication unit (8a-8c) has a communication range (18), within which the communication unit (8a-8c) is able to send and receive data wirelessly via a long-distance wireless communication interface (12), one robot (6a-6d) of the group of robots (4) that is located outside of the communication range (18) of said communication unit (8a-8c) and at the same time at least partially within such a communication range (18) of a second stationary communication unit (8a-8c), with regard to communication with the second stationary communication unit (8a-8c), is operated as a master robot which is connected to the second stationary communication unit (8a-8c) via a long-distance wireless communication interface (12) and to which safety information is transmitted by the second stationary communication unit (8a-8c) via said long-distance wireless communication interface (12), and at least one robot (6a-6d) of the group of robots (4), with regard to the communication with the second stationary communication unit (8a-8c), is operated as a slave robot to which the safety information received by the last-mentioned master robot is forwarded by the last-mentioned master robot via a short-distance wireless communication interface (14).

12. Method according to one of the preceding claims, **characterised in that** the mobile robots (6a-6d) of the group of robots (4) are operated in such a manner that the robots (6a-6d) move in a synchronous manner in relation to one another.

13. System (2), comprising at least one stationary communication unit (8a-8c) for sending and/or receiving information, which has at least one long-distance wireless communication interface (12), as well as a group of robots (4) with a plurality of mobile robots (6a-6d), which each have at least one long-distance wireless communication interface (12), **characterised in that** the mobile robots (6a-6d) each have at least one short-distance wireless communication interface (14) and the system (2) is configured to perform a method according to one of the preceding claims.

14. Computer program for a system (2) according to the precharacterising clause of claim 13,
**characterised in that** the computer program prompts the system (2) to perform a method according to one of claims 1 to 12, when the computer program is executed on the system (2).

15. Computer-readable storage medium with a computer program according to claim 14.

## Revendications

1. Procédé permettant de transmettre des informations de sécurité à un groupe de robots (4), dans lequel le groupe de robots (4) comprend plusieurs robots mobiles (6a - 6d) et les informations de sécurité sont transmises sans fil au groupe de robots (4) par une unité de communication stationnaire (8a - 8c),
**caractérisé en ce qu'**un robot (6a - 6d) du groupe de robots (4) est utilisé en tant que robot maître en ce qui concerne une communication avec l'unité de communication stationnaire (8a - 8c), qui est relié à l'unité de communication stationnaire (8a - 8c) par l'intermédiaire d'une interface de communication sans fil à longue portée (12) et auquel les informations de sécurité sont transmises par l'unité de communication stationnaire (8a - 8c) par l'intermédiaire de l'interface de communication sans fil à longue portée (12), et au moins un robot (6a - 6d) du groupe de robots (4) est utilisé en tant que robot asservi en ce qui concerne la communication avec l'unité de communication stationnaire (8a - 8c), auquel les informations de sécurité reçues par le robot maître sont transmises du robot maître par l'intermédiaire d'une interface de communication sans fil à courte portée (14).

2. Procédé de transmission d'informations d'état à une unité de communication stationnaire (8a - 8c), dans lequel les informations d'état sont transmises sans fil à l'unité de communication stationnaire (8a - 8c) par un groupe de robots (4) comprenant plusieurs robots mobiles (6a - 6d),
**caractérisé en ce qu'**un robot (6a - 6d) du groupe de robots est utilisé en tant que robot maître en ce qui concerne une communication avec l'unité de communication stationnaire (8a - 8c), qui est relié à l'unité de communication stationnaire (8a - 8c) par l'intermédiaire d'une interface de communication sans fil à longue portée (12) et auquel les informations d'état sont transmises par l'unité de communication stationnaire (8a - 8c) par l'intermédiaire de l'interface de communication sans fil à longue portée (12), et au moins un robot (6a - 6d) du groupe de robots (4) est utilisé en tant que robot asservi en ce qui concerne la communication avec l'unité de communication stationnaire (8a - 8c), duquel au moins une partie des informations d'état à transmettre du robot maître à l'unité de communication (8a - 8c) sont transmises par l'intermédiaire d'une interface de communication sans fil à courte portée (14) au robot maître.

3. Procédé selon la revendication 1 ou 2,
**caractérisé en ce que**, en ce qui concerne la communication avec l'unité de communication stationnaire (8a - 8c), à l'exception du robot maître, tous les robots (6a - 6d) du groupe de robots (4) sont utilisés en tant que robots asservis.

4. Procédé selon l'une quelconque des revendications précédentes,
**caractérisé en ce qu'**une interface WLAN ou une interface de téléphonie mobile est utilisée en tant qu'interface de communication sans fil à longue portée (12) et/ou **en ce qu'**une interface Bluetooth ou une interface ZigBee est utilisée en tant qu'interface de communication sans fil à courte portée (14).

5. Procédé selon l'une quelconque des revendications précédentes,
**caractérisé en ce que** le groupe de robots (4) comprend au moins trois robots mobiles (6a - 6d) et au moins l'un des robots asservis est exploité en tant que robot sous-maître, auquel les informations de sécurité reçues du robot maître sont transmises via une interface de communication sans fil à courte portée (14), et à partir duquel ces informations sont transmises via une autre interface de communication sans fil à courte portée (14) à au moins un autre robot asservi du groupe de robots (4).

6. Procédé selon l'une quelconque des revendications précédentes,
**caractérisé en ce que** des données sont transmises en série entre les robots (6a - 6d) du groupe de robots (4), les données étant transmises directement par le robot respectif (6a - 6d) du groupe de robots (4) par l'intermédiaire d'une interface de communication sans fil à courte portée (14) à au plus l'un des autres robots (6a - 6d) du groupe de robots (4).

7. Procédé selon l'une quelconque des revendications précédentes,
**caractérisé en ce que** l'unité de communication stationnaire (8a - 8c) présente une zone de communication (18) à l'intérieur de laquelle l'unité de communication (8a - 8c) peut envoyer et recevoir sans fil des données par l'intermédiaire d'une interface de communication sans fil à longue portée (12), le robot maître du groupe de robots devant se trouver à l'intérieur de la zone de communication pour une communication avec l'unité de communication stationnaire (8a - 8c), le robot maître transmettant les données à au moins un robot asservi du groupe de robots (4), qui peut se trouver au moins temporairement à l'extérieur de la zone de communication (18) de l'unité de communication stationnaire (8a - 8c).

8. Procédé selon l'une quelconque des revendications précédentes,
**caractérisé en ce qu'**un protocole de sécurité est utilisé pour une transmission de données par au moins l'un des deux types d'interfaces de communication sans fil (12, 14), de préférence chacun des deux types d'interfaces de communication sans fil (12, 14).

9. Procédé selon la revendication 8,
**caractérisé en ce que** le protocole PROFIsafe de la norme Profinet est utilisé en tant que protocole de sécurité.

10. Procédé selon l'une quelconque des revendications précédentes,
**caractérisé en ce que** l'unité de communication stationnaire (8a - 8c) présente une zone de communication (18) à l'intérieur de laquelle l'unité de communication (8a - 8c) peut envoyer et recevoir sans fil des données par l'intermédiaire d'une interface de communication sans fil à longue portée(12), dans lequel lorsque le robot maître quitte la zone de communication (18) de l'unité de communication (8a - 8c), un robot asservi du groupe de robots (4) devient le nouveau robot maître en ce qui concerne la communication avec l'unité de communication stationnaire (8a - 8c) et l'ancien robot maître devient un robot asservi en ce qui concerne la communication avec l'unité de communication stationnaire (8a - 8c).

11. Procédé selon l'une quelconque des revendications précédentes,
**caractérisé en ce que** l'unité de communication stationnaire (8a - 8c) présente une zone de communication (18) dans laquelle l'unité de communication (8a - 8c) peut envoyer et recevoir sans fil des données par l'intermédiaire d'une interface de communication sans fil à longue portée (12), un robot (6a - 6d) du groupe de robots (4), qui se trouve en dehors de la zone de communication (18) de ladite unité de communication (8a - 8c) et en même temps au moins partiellement dans une telle zone de communication (18) d'une deuxième unité de communication stationnaire (8a - 8c), est utilisé en tant que robot maître en ce qui concerne une communication avec la deuxième unité de communication stationnaire (8a - 8c), qui est relié à la deuxième unité de communication stationnaire (8a - 8c) par l'intermédiaire d'une interface de communication sans fil à longue portée (12) et auquel des informations de sécurité sont transmises par la deuxième unité de communication stationnaire (8a - 8c) par l'intermédiaire de cette interface de communication sans fil à longue portée (12), et au moins un robot (6a - 6d) du groupe de robots (4) est utilisé en tant que robot asservi en ce qui concerne la communication avec la deuxième unité de communication stationnaire (8a - 8c), auquel les informations de sécurité reçues de ce dernier robot maître sont transmises par ce dernier robot maître via une interface de communication sans fil à courte portée (14).

12. Procédé selon l'une quelconque des revendications précédentes,
**caractérisé en ce que** les robots mobiles (6a - 6d) du groupe de robots (4) sont exploités de telle sorte que les robots (6a - 6d) se déplacent de manière synchrone les uns par rapport aux autres.

13. Système (2), comprenant au moins une unité de communication stationnaire (8a - 8c) pour l'émission et/ou la réception d'informations, qui présente au moins une interface de communication sans fil à longue portée (12), ainsi qu'un groupe de robots (4) avec plusieurs robots mobiles (6a - 6d), qui présentent chacun au moins une interface de communication sans fil à longue portée (12),
**caractérisé en ce que** les robots mobiles (6a - 6d) présentent chacun au moins une interface de communication sans fil à courte portée (14) et le système (2) est conçu afin de mettre en œuvre un procédé selon l'une quelconque des revendications précédentes.

14. Programme informatique pour un système (2) selon le préambule de la revendication 13,
**caractérisé en ce que** le programme informatique amène le système (2) à exécuter un procédé selon l'une quelconque des revendications 1 à 12 lorsque le programme informatique est exécuté sur le système (2).

15. Support de stockage lisible par ordinateur avec un programme informatique selon la revendication 14.
